# DEMANDE DE BREVET EUROPEEN

(11) **EP 1 726 499 A1**
(43) Date de publication de la demande: **29.11.2006**
(21) Numéro de dépôt: 06300466.7
(22) Date de dépôt: 12.05.2006
(51) Int. Cl.: B60T 13/74, B60T 7/10, B60T 11/04

(54) **Dispositif électrique de freinage de stationnement pour véhicule automobile, et véhicule automobile correspondant**

(30) Priorité: 27.05.2005 FR 0505388
(71) Demandeur: PEUGEOT CITROËN AUTOMOBILES S.A., 78140 Velizy Villacoublay (FR)
(72) Inventeur: Bez, Simon, 92160, ANTONY (FR)

(57) **Abrégé**

Ce dispositif comprend un moteur électrique (4), un organe de transmission (8), propre à être entraîné en rotation par le moteur électrique, ainsi qu'un organe d'actionnement (14) d'au moins un câble de commande (16) d'au moins un frein de ce véhicule, cet organe d'actionnement étant propre à être entraîné en translation par l'organe de transmission, selon deux sens opposés correspondant respectivement à une mise en tension et une détente du ou de chaque câble.

Cet organe de transmission comporte une came de transmission (10), propre à entraîner en translation ledit organe d'actionnement (14).

## Description

La présente invention concerne un dispositif électrique de freinage de stationnement pour véhicule automobile, ainsi qu'un véhicule automobile pourvu d'un tel dispositif électrique de freinage de stationnement.

De manière classique, comme cela est par exemple connu de FR-A-2 848 970, un tel dispositif comprend tout d'abord un moteur électrique, le plus souvent associé à un réducteur. Ce moteur est propre à entraîner en rotation une vis sans fin, qui induit le déplacement en translation d'un écrou. Ce dernier, qui peut être associé à un palonnier de répartition des efforts, assure l'actionnement d'au moins un câble, dont chacun est destiné à la commande d'un frein correspondant du véhicule.

En phase de serrage, le moteur et son éventuel réducteur doivent fournir l'énergie nécessaire pour tirer sur le câble précité, relié au frein correspondant, cet ensemble formé du câble et du frein pouvant être assimilé à un ressort qu'il s'agit de comprimer. En phase de desserrage, l'énergie que doit fournir ce moteur est nettement plus réduite, dans la mesure où l'ensemble composé du câble et du frein restitue de l'énergie.

On notera également que la phase de serrage évoquée ci-dessus s'accompagne de la fourniture d'un couple particulièrement élevé. Ceci conditionne le rapport de démultiplication qu'il convient d'utiliser dans le réducteur, ainsi que la puissance du moteur électrique. Cependant, ce serrage ne nécessite pas une rapidité particulière, puisqu'il peut être mis en oeuvre en une seconde ou plus.

En revanche, la phase de desserrage précitée ne nécessite que peu de couple, puisque l'énergie emmagasinée dans les câbles et les freins participe largement à cette opération. Cependant, un tel desserrage doit être mis en oeuvre de façon nettement plus rapide que le serrage, en une durée inférieure à une seconde. On notera à cet égard que le réducteur généralement employé ne permet pas nécessairement d'atteindre une dynamique de desserrage suffisante.

Ceci étant précisé, l'invention vise à optimiser le fonctionnement, en termes énergétiques, d'un dispositif électrique de freinage de stationnement du type précité, en particulier dans les phases respectives de serrage et de desserrage décrites ci-dessus.

A cet effet, elle a pour objet un dispositif électrique de freinage de stationnement pour véhicule automobile, comprenant un moteur électrique, un organe de transmission, propre à être entraîné en rotation par le moteur électrique, ainsi qu'un organe d'actionnement d'au moins un câble de commande d'au moins un frein de ce véhicule, cet organe d'actionnement étant propre à être entraîné en translation par l'organe de transmission, selon deux sens opposés correspondant respectivement à une mise en tension et à une détente du ou de chaque câble, caractérisé en ce que l'organe de transmission comporte une came de transmission, propre à entraîner en translation ledit organe d'actionnement.

Selon d'autres caractéristiques de l'invention :
- en position serrée du dispositif, un premier point, ou point de serrage, de la came est en prise avec l'organe d'actionnement alors que, en position desserrée du dispositif, un second point, ou point de desserrage, de la came est en prise avec cet organe d'actionnement, cette came présentant une première surface, ou surface de serrage, venant en prise avec l'organe d'actionnement lors du passage de la position desserrée à la position serrée, ainsi qu'une deuxième surface, ou surface de desserrage, venant en prise avec l'organe d'actionnement lors du passage de la position serrée à la position desserrée, la surface de serrage présentant une longueur supérieure à la longueur de la surface de desserrage ;
- le point de desserrage et le point de serrage sont alignés avec le centre de la came, de sorte que la surface de serrage et la surface de desserrage s'étendent toutes deux sur un secteur angulaire de 180° de la came ;
- la surface de serrage s'étend sur un secteur angulaire supérieur à 180° de la came, notamment égal à 270°, alors que la surface de desserrage s'étend sur un secteur angulaire de la came inférieur à 180°, notamment égal à 90° ;
- la came de transmission vient en prise de manière directe avec l'organe d'actionnement, en particulier avec un galet appartenant à cet organe d'actionnement ;
- la came de transmission vient en prise de manière indirecte avec l'organe d'actionnement, via un organe intermédiaire ;
- l'organe intermédiaire est propre à être entraîné en rotation autour d'un axe et possède deux parties disposées de part et d'autre de cet axe, qui sont propres à venir en prise respectivement avec la came de transmission et avec l'organe d'actionnement, ces deux parties présentant des dimensions axiales différentes, de façon à créer un rapport de démultiplication entre les amplitudes respectives des mouvements de la came de transmission et de l'organe d'actionnement ;
- l'organe de transmission est une roue dentée propre à être entraînée par une vis sans fin mise en rotation par le moteur électrique ;
- l'organe d'actionnement est entraîné en translation selon une direction perpendiculaire à l'axe de rotation de la came ;
- l'organe d'actionnement est entraîné en translation selon une direction parallèle à l'axe de rotation de la came.

L'invention a également pour objet un véhicule automobile comprenant au moins un dispositif électrique de freinage de stationnement, tel que défini ci-dessus.

L'invention va être décrite ci-après, en référence aux dessins annexés, donnés uniquement à titre d'exemples non limitatifs, dans lesquels :
- la figure 1 est une vue schématique, illustrant un premier exemple de réalisation d'un dispositif électrique de freinage de stationnement conforme à l'invention, en position desserrée ;
- la figure 2 est une vue de face, à plus grande échelle, illustrant une came appartenant au dispositif électrique de freinage de stationnement de la figure 1 ;
- les figures 3 à 5 sont des vues schématiques, analogues à la figure 1, illustrant le dispositif électrique de freinage de stationnement de la figure 1, successivement en position intermédiaire dans la phase de serrage, en position serrée, et en position intermédiaire dans la phase de desserrage ; et
- les figures 6 et 7 sont des vues schématiques, analogues notamment à la figure 1, illustrant deux exemples supplémentaires de réalisation d'un dispositif électrique de freinage de stationnement conforme à l'invention, à chaque fois en position desserrée.

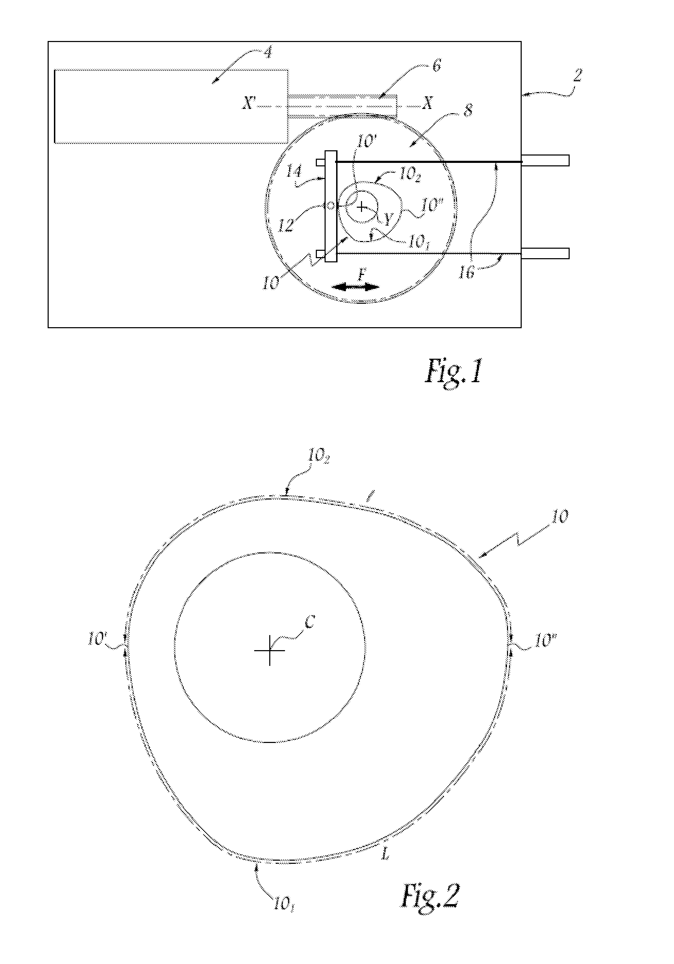

La figure 1 illustre un premier exemple de réalisation d'un dispositif électrique de freinage de stationnement conforme à l'invention, dans sa position desserrée. Ce dispositif comprend un carter 2 illustré partiellement, dans lequel est reçu un moteur électrique 4, ainsi qu'une vis sans fin 6, susceptible d'être entraînée en rotation autour d'un axe situé dans le plan de la feuille, qui est noté X-X'. Cette vis sans fin 6 entraîne à son tour une roue tangente 8, propre à entrer en rotation autour d'un axe perpendiculaire au plan de la feuille, qui est noté Y.

Cette roue 8 est pourvue d'une came 10, qui se trouve donc également susceptible d'entrer en rotation autour de cet axe Y. Cette came 10 se trouve en contact avec un galet 12, lequel appartient à un palonnier 14 propre à être déplacé en translation selon la double flèche horizontale F. De façon connue en soi, ce palonnier 14 est susceptible d'actionner deux câbles 16, dont chacun est relié à un frein correspondant non représenté, appartenant au véhicule automobile équipé du dispositif de l'invention.

La figure 2 illustre de façon plus précise la came 10, appartenant au dispositif électrique de la figure 1. On note tout d'abord C le centre de rotation de cette came, situé sur l'axe Y, qui sera dénommé dans ce qui suit « centre de la came ». On note également 10' et 10" les points respectivement le plus proche et le plus éloigné de ce centre C.

Comme on le verra plus précisément dans ce qui suit, lorsque le point 10' est en contact avec le galet 12, le dispositif se trouve en position desserrée alors que, lorsque le point 10" se trouve en contact avec ce galet, le dispositif est dans sa position serrée. Par conséquent, on nommera respectivement ces points 10' et 10" points de desserrage et de serrage. Ces points 10' et 10" sont alignés avec le centre C de la came 10, de sorte qu'une rotation de 180° de cette came permet de passer de l'un à l'autre.

On distingue la surface 10₁, située en partie inférieure de la came sur la figure 1, ainsi que la surface 10₂, située en partie supérieure. Dans ce qui suit, la surface 10₁ sera dénommée de serrage, et celle 10₂ surface de desserrage.

Etant donné que les points 10' et 10" sont alignés avec le centre C, les deux surfaces 10₁ et 10₂ s'étendent chacune sur un secteur angulaire de la came, qui est égal à 180°. En revanche, ces deux surfaces 10₁ et 10₂, reliant les points respectifs de desserrage 10' et de serrage 10", ne sont pas symétriques l'une de l'autre.

En effet, comme cela ressort plus particulièrement de la figure 2, la surface de serrage 10₁ présente un profil plus bombé que la surface de desserrage 10₂. En d'autres termes, la distance séparant le centre C de la surface de serrage 10₁ augmente plus rapidement que celle séparant ce même centre de la surface de desserrage 10₂. Ceci signifie donc que, en notant respectivement L et 1 les longueurs respectives des surfaces 10₁ et 10₂, la longueur L est supérieure à celle référencée 1.

Etant donné qu'une rotation de 180° de la came permet de passer d'un point 10' ou 10" à l'autre 10" ou 10', ceci revient à dire que le temps de contact de la surface de serrage 10₁ avec le galet 12 et, par conséquent, le palonnier 14, est supérieur au temps de contact de la surface de desserrage 10₂ avec ce même galet 12. En d'autres termes, comme on le verra plus en détail dans ce qui suit, la durée de la phase de serrage est supérieure à celle de la phase de desserrage.

En vue d'actionner le dispositif de freinage de l'invention, à partir de la position initiale de desserrage de la figure 1, il s'agit tout d'abord de mettre en marche le moteur électrique 4. Ce dernier entraîne alors en rotation la vis 6, autour de l'axe X-X', puis la roue 8 ainsi que la came 10, toutes deux autour de l'axe Y.

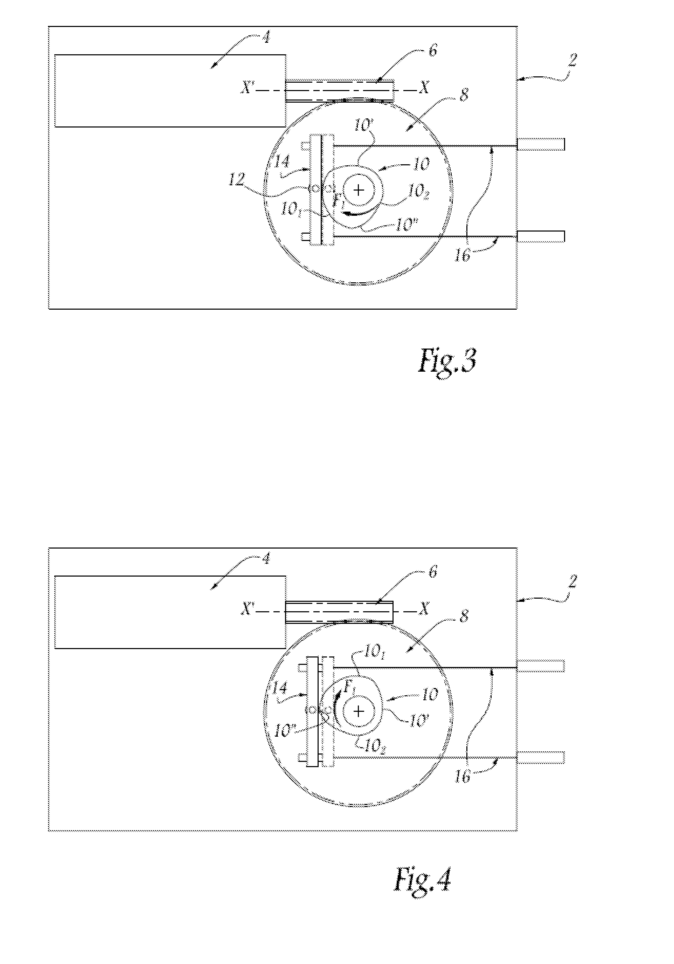

Cette rotation s'effectue dans le sens des aiguilles d'une montre, à savoir selon la flèche F₁ à la figure 3. Ceci contribue à mettre en contact le galet 12 avec la surface de serrage 10₁, ce qui tend à repousser le palonnier 14 vers la gauche et, par conséquent, à exercer une traction sur les câbles 16. A cet égard, la figure 3 illustre le dispositif de l'invention dans une position intermédiaire de cette phase de serrage, à savoir au bout d'environ 1/4 de tour de la came.

Au terme de cette phase (figure 4), le galet se trouve en contact avec le point de serrage 10" de la came 10, de sorte que le palonnier se trouve dans sa position la plus éloignée par rapport à celle qu'il occupait à la figure 1, qui est illustrée en pointillés sur les figures 3 à 5. Comme on l'a vu dans ce qui précède, le passage entre la position desserrée de la figure 1 et la position serrée de la figure 4 s'effectue moyennant une rotation de 180° de la came.

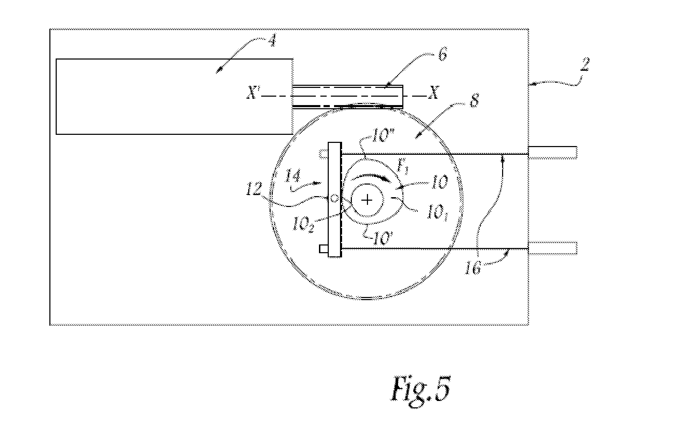

Puis, comme le montre désormais la figure 5, la rotation de la came se poursuit, de sorte que la surface de desserrage 10₂ vient désormais au contact du galet 12. Par conséquent, le palonnier 14 est à nouveau entraîné en translation vers la droite, ce qui contribue à réduire l'intensité de la traction exercée sur les câbles 16. A cet égard, cette figure 5 correspond à une position intermédiaire du dispositif dans sa phase de desserrage, correspondant à une rotation de 3/4 de tour de la came à partir de la position initiale de la figure 1.

Enfin, au terme de la phase de desserrage, le dispositif retrouve son agencement de la figure 1, à savoir que le galet 12 est à nouveau en contact avec le point 10'. Comme on l'a vu dans ce qui précède, le temps nécessaire au passage du dispositif depuis la position desserrée de la figure 1 vers la position serrée de la figure 4, est supérieur à celui correspondant au passage depuis la position serrée de la figure 4 vers la position desserrée de la figure 1, puisque la longueur L de la surface 10₁ est supérieure à la longueur 1 de la surface 10₂.

En d'autres termes, la phase de serrage présente une durée supérieure à celle de desserrage. Ceci est également dû au fait que, lors de cette phase de desserrage, l'effort à fournir par le moteur est notablement réduit. De la sorte, celui-ci peut travailler à un régime de rotation supérieur, ce qui induit une augmentation correspondante de la vitesse angulaire de la came.

Dans le présent exemple, le palonnier 14 est vertical et se trouve placé à gauche de la came 10, alors que la sortie des câbles 16 se trouve à droite de cette came. Cependant, à titre de variante non représentée, ce palonnier peut être prévu à droite, et la sortie de câbles à gauche de la came. Ce palonnier peut également s'étendre de manière horizontale, au-dessus ou au-dessous de la came, la sortie de câbles étant alors prévue au-dessous ou au-dessus de cette dernière.

Dans le présent exemple, les surfaces de serrage 10₁ et de desserrage 10₂ s'étendent toutes deux sur des secteurs angulaires égaux de la came, à savoir 180°. Cependant, à titre de variante avantageuse, on peut prévoir que la surface de serrage 10₁ s'étend sur un secteur angulaire plus important que celui de la surface de desserrage 10₂. Dans ce cas, les points de desserrage 10' et de serrage 10" ne sont plus alignés avec le centre C de la came, comme dans l'exemple de la figure 2.

A titre d'exemple, le secteur angulaire de la surface de serrage peut être de 270°, alors que celui de la phase de desserrage est de 90°. Cette mesure permet de s'adapter, de façon satisfaisante, aux spécificités propres aux phases respectives de serrage et de desserrage du frein de stationnement électrique.

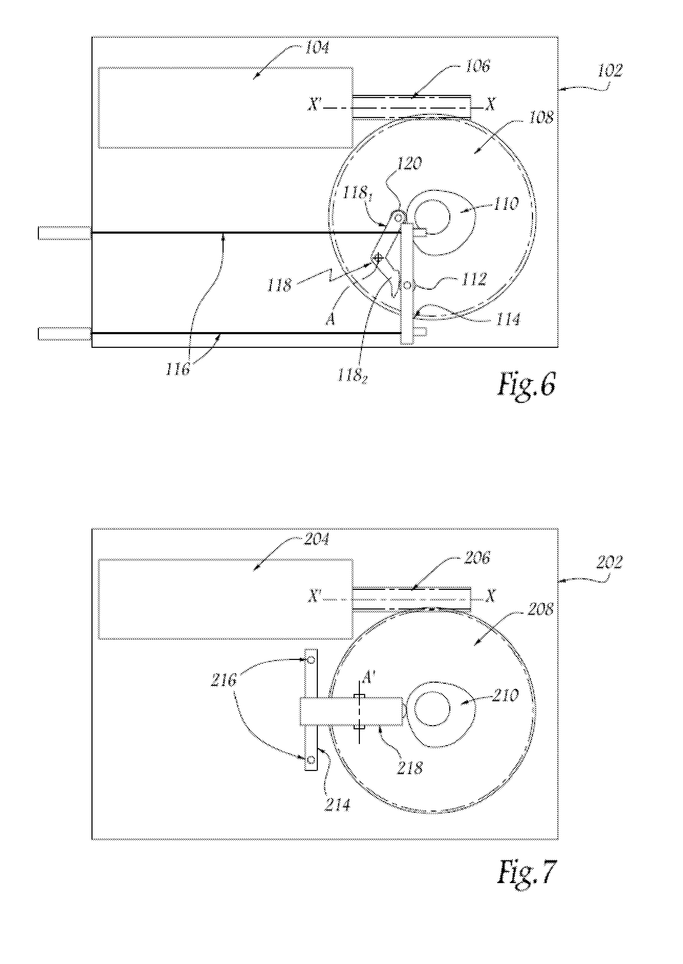

La figure 6 illustre un dispositif électrique de freinage de stationnement conforme à un second mode de réalisation de l'invention. Sur cette figure, les éléments mécaniques analogues à ceux des figures 1 à 5 y sont affectés des mêmes numéros de référence, augmentés de 100.

La différence existant entre le dispositif des figures 1 à 5 et celui de la figure 6 réside dans le fait que, dans ce dernier, la came ne vient pas en prise directement avec le palonnier. En effet, il est prévu un organe intermédiaire, à savoir un culbuteur 118 articulé par rapport à la roue 108 autour d'un axe A, qui est perpendiculaire au plan de la feuille. Ce culbuteur 118 possède deux ailes, dont l'une 118₁ vient en contact avec la came 110, par l'intermédiaire d'un galet 120, et dont l'autre vient en contact avec le galet 112 du palonnier 114.

Ainsi, en service, le déplacement en rotation de la came 110 entraîne un pivotement correspondant du culbuteur 118, autour de l'axe A. Ceci induit alors une translation horizontale des câbles 116, dans un sens ou dans un autre, qui provoque soit une mise en tension, soit un relâchement des câbles 116.

On notera que, lorsque les longueurs des ailes 118₁ et 118₂ sont différentes, ceci permet de créer un rapport de démultiplication dans la transmission du mouvement de la came 110 à celui du palonnier 114. Ainsi, si la longueur de l'aile inférieure 118₂ est supérieure à celle de l'aile supérieure 118₁, l'amplitude du mouvement du palonnier 114 sera supérieure à celle du mouvement de la came, et inversement.

Dans le présent exemple, le culbuteur 118, le palonnier 114 et la sortie des câbles 116 sont disposés à gauche de la came 110. Cependant, à titre de variantes, comme on l'a vu ci-dessus, on peut prévoir d'autres agencements de ces organes mécaniques, qui peuvent être disposés en tout ou partie à droite, au-dessus ou au-dessous de cette came.

La figure 7 illustre un dispositif électrique de freinage de stationnement conforme à un troisième mode de réalisation de l'invention. Sur cette figure, des éléments mécaniques analogues à ceux de la figure 6 y sont affectés des mêmes numéros de référence, augmentés de 100.

La différence entre le mode de réalisation de la figure 7 et le second mode illustré en référence à la figure 6, réside dans le fait que l'axe A' du culbuteur 218 s'étend dans le plan de la feuille. Par conséquent, les câbles 216 s'étendent perpendiculairement au plan de cette feuille.

Le fonctionnement du dispositif illustré à la figure 7 est analogue à celui du mode de réalisation de la figure 6. Lors de la mise en rotation de la came 210, le culbuteur 218 pivote autour de son axe A'. Ceci induit une translation correspondante du palonnier 214, selon une direction perpendiculaire au plan de la feuille, ainsi qu'une mise en tension ou un relâchement des câbles 216.

L'invention n'est pas limitée aux exemples décrits et représentés.

Ainsi, ces différents exemples font intervenir un palonnier, disposé à l'intérieur du carter. Cependant, à titre de variante, il est possible de prévoir une sortie de câbles unique, associée à un répartiteur de câbles, de type connu en soi, qui se trouve disposé en dehors du carter.

L'invention permet de réaliser les objectifs précédemment mentionnés.

En effet, l'art antérieur fait appel à des réducteurs qui sont constitués de pignons et de roues dentées, engrenés les uns aux autres. Par conséquent, lorsque le moteur électrique tourne dans un sens ou dans l'autre, la même démultiplication se trouve appliquée, ce qui ne permet pas de répondre aux besoins spécifiques des phases respectives de serrage et de desserrage.

En revanche, grâce à l'invention, la came utilisée par celle-ci est à même de présenter deux surfaces différentes, correspondant à ces phases de serrage et de desserrage, afin de s'adapter de manière optimale à ces dernières. Ainsi, dans la phase de serrage, la came permet de bénéficier du couple moteur suffisant pour atteindre l'effort souhaité. Par ailleurs, dans la phase de desserrage, la présence de cette came autorise une dynamique satisfaisante, en vue de relâcher l'effort sur le câble. On notera également que la came, dont tire parti l'invention, constitue un organe mécanique robuste, éprouvé et économique.

Le fait d'utiliser un réducteur formé par l'association d'une vis sans fin 6, 106 ou 206 et d'une roue dentée 8, 108 ou 208 présente des avantages spécifiques. En effet, cette mesure permet d'assurer l'irréversibilité du mouvement transmis à la came et, par conséquent, aux câbles.

## Revendications

1. Dispositif électrique de freinage de stationnement pour véhicule automobile, comprenant un moteur électrique (4 ; 104 ; 204), un organe de transmission (8 ; 108 ; 208), propre à être entraîné en rotation par le moteur électrique, ainsi qu'un organe d'actionnement (14 ; 114 ; 214) d'au moins un câble de commande (16 ; 116 ; 216) d'au moins un frein de ce véhicule, cet organe d'actionnement étant propre à être entraîné en translation par l'organe de transmission, selon deux sens opposés correspondant respectivement à une mise en tension et à une détente du ou de chaque câble, **caractérisé en ce que** l'organe de transmission (8 ; 108 ; 208) comporte une came de transmission (10 ; 110 ; 210), propre à entraîner en translation ledit organe d'actionnement (14 ; 114 ; 214).

2. Dispositif selon la revendication 1, **caractérisé en ce que**, en position serrée du dispositif, un premier point (10"), ou point de serrage, de la came (10) est en prise avec l'organe d'actionnement (14) alors que, en position desserrée du dispositif, un second point (10'), ou point de desserrage, de la came (10) est en prise avec cet organe d'actionnement, cette came présentant une première surface (10₁), ou surface de serrage, venant en prise avec l'organe d'actionnement lors du passage de la position desserrée à la position serrée, ainsi qu'une deuxième surface (10₂), ou surface de desserrage, venant en prise avec l'organe d'actionnement lors du passage de la position serrée à la position desserrée, la surface de serrage (10₁) présentant une longueur (L) supérieure à la longueur (1) de la surface de desserrage (10₂).

3. Dispositif selon la revendication 2, **caractérisé en ce que** le point de desserrage (10') et le point de serrage (10") sont alignés avec le centre (C) de la came (10), de sorte que la surface de serrage (10₁) et la surface de desserrage (10₂) s'étendent toutes deux sur un secteur angulaire de la came (10), qui est égal à 180°.

4. Dispositif selon la revendication 2, **caractérisé en ce que** la surface de serrage s'étend sur un secteur angulaire de la came supérieur à 180°, notamment égal à 270°, alors que la surface de desserrage s'étend sur un secteur angulaire de la came inférieur à 180°, notamment égal à 90°.

5. Dispositif selon l'une quelconque des revendications précédentes, **caractérisé en ce que** la came de transmission (10) vient en prise de manière directe avec l'organe d'actionnement (14), en particulier avec un galet (12) appartenant à cet organe d'actionnement.

6. Dispositif selon l'une des revendications 1 à 4, **caractérisé en ce que** la came de transmission (110 ; 210) vient en prise de manière indirecte avec l'organe d'actionnement (114 ; 214), via un organe intermédiaire (118 ; 218) .

7. Dispositif selon la revendication 6, **caractérisé en ce que** l'organe intermédiaire (118 ; 218) est propre à être entraîné en rotation autour d'un axe (A ; A') et possède deux parties (118₁ ; 118₂) disposées de part et d'autre de cet axe, qui sont propres à venir en prise respectivement avec la came de transmission (110 ; 210) et avec l'organe d'actionnement (114 ; 214), ces deux parties présentant des dimensions axiales différentes, de façon à créer un rapport de démultiplication entre les amplitudes respectives des mouvements de la came de transmission (110 ; 210) et de l'organe d'actionnement (114 ; 214).

8. Dispositif selon l'une quelconque des revendications précédentes, **caractérisé en ce que** l'organe de transmission est une roue dentée (8 ; 108 ; 208) propre à être entraînée par une vis sans fin (6 ; 106 ; 206) mise en rotation par le moteur électrique (4 ; 104 ;204).

9. Dispositif selon l'une quelconque des revendications précédentes, **caractérisé en ce que** l'organe d'actionnement (14 ; 114) est entraîné en translation selon une direction perpendiculaire à l'axe de rotation (Y) de la came (10 ; 110).

10. Dispositif selon l'une quelconque des revendications 1 à 8, **caractérisé en ce que** l'organe d'actionnement (214) est entraîné en translation selon une direction parallèle à l'axe de rotation de la came (210).

11. Véhicule automobile comprenant au moins un dispositif électrique de freinage de stationnement, conforme à l'une quelconque des revendications précédentes.
